# EUROPÄISCHE PATENTSCHRIFT

(11) **EP 3 267 270 B1**
(45) Veröffentlichungstag und Bekanntmachung des Hinweises auf die Patenterteilung: **19.01.2022**
(21) Anmeldenummer: 16177938.4
(22) Anmeldetag: 05.07.2016
(51) Int. Cl.: G05B 19/042

(54) **FEHLERSICHERES AUTOMATISIERUNGSSYSTEM**
FAILSAFE AUTOMATION SYSTEM
SYSTEME D'AUTOMATISATION A SECURITE INTRINSEQUE

(43) Veröffentlichungstag der Anmeldung: 10.01.2018
(73) Patentinhaber: Siemens Aktiengesellschaft, 80333 München (DE)
(72) Erfinder: Extra, Johannes, 91058 Erlangen (DE); Jartyn, Hermann, 91338 Igensdorf (DE)

(56) Entgegenhaltungen:
- EP-A1- 2 395 274
- EP-A2- 1 703 346
- WO-A1-2015/162760
- DE-A1-102007 028 390
- DE-B3-102009 054 157
- US-A1- 2016 313 719

## Beschreibung

Die Erfindung betrifft ein fehlersicheres Automatisierungssystem nach dem Oberbegriff des Patentanspruchs 1. Weiter betrifft die Erfindung ein Eingabesystem für ein fehlersicheres Automatisierungssystem. Zudem betrifft die Erfindung eine Anlage.

Fehlersichere Automatisierungssysteme dienen zum Steuern und/oder Regeln von Antrieben in sicherheitsrelevanten Bereichen wie einer industriellen Anlage. Zur Erhöhung der Sicherheit werden bei Automatisierungssystemen beispielhaft sichere Eingabemethoden verwendet, einzelne Elemente des Automatisierungssystems redundant (d.h. mehrfach) ausgeführt und/oder die Übertragung von Signalen zwischen den einzelnen Elementen sicher ausgestaltet.

EP 2 192 461 A1 beschreibt hierzu eine Steuervorrichtung und ein System zur fehlersicheren Datenübertragung.

Die PCT-Offenlegungsschrift WO 2015/162760 A1 zeigt eine Systembus I/F Funktionseinheit zum direkten Übermitteln und Erhalten von Daten durch das Bussystem und eine weitere an einer Basis angebrachte Einheit, eine SILeinstellungserhaltende Einheit zum Aufrechterhalten von Einstellungen je nachdem ob nur das Bussystem genutzt wird oder das Bussystem gemeinsam mit einer weiteren CPU Einheit genutzt wird. Es wird ein Vergleich durchgeführt zwischen Ergebnissen, die von der weiteren CPU-Einheit erhalten werden und denen, die von einer Programmausführungseinheit erhalten werde. Es wird ein Ausgabewert an die Ausgabeeinheit übermittelt oder ein Fehler gemeldet, je nachdem, ob der Vergleich Übereinstimmung zeigt oder nicht.

Die deutsche Patentschrift DE102009054157B3 beschreibt ein Steuersystem zum Steuern von sicherheitskritischen und nichtsicherheitskritischen Prozessen und/ oder Anlagenkomponenten, mit einem Safetycontroller, der zur Bereitstellung der sicherheitsgerichteten Funktionen wenigstens zwei Verarbeitungseinheiten und zur Datenübertragung einen Speicher aufweist.

In Anlagen, insbesondere Produktionsmaschinen, gibt es Bereiche, in denen Teile der Anlage unterschiedlichen Standards bezüglich der Fehlersicherheit bedürfen.

Es ist Aufgabe der Erfindung, ein Automatisierungssystem bereitzustellen, welches flexibel an unterschiedliche Sicherheitsbedürfnisse anpassbar ist.

Die Aufgabe wird durch ein fehlersicheres Automatisierungssystem nach Anspruch 1 gelöst.

Die Aufgabe wird weiter durch eine Anlage nach Anspruch 8 gelöst.

Vorteilhafte Ausgestaltungen und Weiterentwicklungen sind Gegenstand der abhängigen Patentansprüche.

Das fehlersichere Automatisierungssystem weist eine Bewegungssteuerung und mehrere fehlersichere Prozessoren auf. Das fehlersichere Automatisierungssystem weist Antriebe auf. Das fehlersichere Automatisierungssystem dient zur Steuerung und/oder Regelung einer Mehrzahl von Antrieben. Zur Steuerung und/oder Regelung der Antriebe dient die Bewegungssteuerung. Die Antriebe sind jeweils einem Bereich zugeordnet, wobei dem jeweiligen Bereich jeweils eine Sicherheitsstufe zugewiesen ist und wobei die Bereiche jeweils zueinander benachbart, insbesondere räumlich benachbart, angeordnet sind.

Die fehlersicheren Prozessoren können **a**ls separate Hardware-Komponente ausgeführt sein. Die fehlersicheren Prozessoren können ebenso in die Bewegungssteuerung und/oder in den Antrieb integriert sein. Die fehlersicheren Prozessoren sind bevorzugt als ein Software-Baustein oder als zusätzliches Computerprogramm ausgeführt.

Unter einem Automatisierungssystem wird zumindest ein Teil eines Antriebsystems verstanden. Das Automatisierungssystem weist Komponenten wie eine Bewegungssteuerung, insbesondere eine SpeicherProgrammierbare Steuerung (SPS), ggf. Prozessoren wie Schaltelemente oder Netzwerkadapter (Proxys, Hosts) sowie Antriebe auf. Die Antriebe weisen jeweils einen Stromrichter und einen Motor auf. Ein fehlersicheres Automatisierungssystem weist fehlersichere Prozessoren auf, wobei die fehlersicheren Prozessoren beispielhaft die Übertragung von Signalen von der Bewegungssteuerung zu den Antrieben überprüfen. Ein Automatisierungssystem weist vorteilhaft eine Datenverbindung zur Übertragung von Daten und/oder Signalen auf.

Die Anlage ist insbesondere als Produktionsmaschine, Werkzeugmaschine oder industrielle Anlage ausgebildet, wobei die Anlage ein hier beschriebenes fehlersicheres Automatisierungssystem aufweist.

Die Antriebe sind vorteilhaft mit der Bewegungssteuerung verbunden. Die Antriebe weisen einen Stromrichter bzw. einen Frequenzumrichter und eine elektrische Maschine, insbesondere einen (Elektro-)Motor, auf. Entsprechend der Sicherheitsstufe umfasst ein Antrieb ggf. eine Bremse und/oder einen Geber. Die Bremse dient vorzugsweise zum schnelleren Abbremsen des Antriebs und/oder zum Sicherstellen des Stillstandes des Antriebs. Vorteilhaft verkürzt eine Bremse die Aktionszeit des jeweiligen Antriebs. Der Geber dient vorzugweise zur Verifikation der Bewegung des Antriebs. Sowohl die Bremse als auch der Geber kann mit der Bewegungssteuerung verbunden sein.

Unter einer Sicherheitsstufe kann verstanden werden, dass ein Antrieb in einer vorgegebenen Zeit (Aktionszeit) von seiner jeweiligen Bewegungsgeschwindigkeit zum Stillstand kommt. Je höher die Sicherheitsstufe ist, desto geringer ist die vorgegebene Aktionszeit, bis der Antrieb zum Stillstand kommt. Für eine Erhöhung der Sicherheitsstufe kann überdies eine mechanische und/oder elektronische Bremse Einsatz finden.

Je nach Einsatz des Antriebs kann gemäß gesetzlichen Vorgaben eine bestimmte Sicherheitsstufe vorgegeben sein. Beispielhaft ist in Bereichen einer industriellen Anlage, in denen Menschen hantieren, die Sicherheitsstufe besonders hoch.

Fehlersicherheit kann hier bedeuten, dass:
- ein Ausfall einzelner Komponenten durch einen redundanten Aufbau kritischer Komponenten wie der Bewegungsteuerung, oder einem Prozessor verhindert wird,
- eine festgelegte maximale Abbremszeit (Aktionszeit) für den jeweiligen Antrieb vorgegeben sein kann,
- eine fehlersichere Datenverbindung für eine sichere Übertragung von Daten und/oder Signalen von einer Komponente zu einer weiteren Komponente ausgebildet ist,
- und/oder weitere Komponenten wie eine Bremse oder ein zusätzlicher Geber eine Fehlfunktion des jeweiligen Antriebs verhindern.

Unter einem fehlersicheren Automatisierungssystem wird ein Automatisierungssystem verstanden, welches ein oder mehrere der vorstehend genannten Merkmale der Fehlersicherheit aufweist.

Ein fehlersicheres Automatisierungssystem oder ein fehlersicheres Antriebssystem kann sich jeweils auch durch eine maximale Geschwindigkeit des jeweiligen Antriebs auszeichnen.

Ein fehlersichereres Automatisierungssystem kann sich zudem oder alternativ durch eine festgelegte Reaktion bei einem (eintreffenden) Signal auszeichnen. So kann beispielsweise festgelegt sein, dass ein Öffnen einer Abdeckung bei einem Signal erst nach einer festgelegten Zeitdauer möglich ist.

Unter einer Sicherheitsstufe wird hier verstanden, dass dem jeweiligen Antrieb, welcher der Sicherheitsstufe zugeordnet ist, eine Zeitdauer, insbesondere eine (Re-) Aktionszeit zugeordnet ist. Die festgelegte Zeitdauer ist die Zeitdauer, bei dem der Antrieb spätestens zum Stillstand gelangt. Die festgelegte Zeitdauer kann auch die Zeitdauer sein, nach welcher von dem jeweiligen Antrieb kein Drehmoment mehr ausgeht. Die festgelegte Zeitdauer wird hier auch als Aktionszeit bezeichnet.

Unter einem fehlersicheren Prozessor kann ein Modul verstanden werden, welches eine sichere Übertragung von Daten zwischen der Bewegungssteuerung und dem jeweiligen Antrieb unterstützt oder gewährleistet. Daher ist ein fehlersicherer Prozessor vorzugsweise auch als Kommunikationsmodul ausgestaltet. Beispielhaft ist ein fehlersicherer Prozessor ein fehlersicherer Proxy-Baustein. Fehlersicher heißt auch, dass ein fehlersicheres Zusammenwirken mehrerer Bausteine in einem ansonsten nicht-fehlersicheren Umfeld erfolgen kann.

Erfindungsgemäß ist der Raum, in dem sich die Antriebe befinden, in eine Mehrzahl von Bereiche unterteilt. Erfindungsgemäß sind die Bereiche räumlich benachbart und optional im Wesentlichen zusammenhängend. Ein Raum ist insbesondere ein Bereich einer Fertigungshalle. Der Raum weist beispielhaft einen ersten Bereich, einen zweiten Bereich und einen dritten Bereich auf. Der erste Bereich kann die eigentliche Anlage oder Produktionsmaschine, insbesondere eine Presse, aufweisen. Dem ersten Bereich ist beispielhaft eine erste, z.B. niedrige, Sicherheitsstufe zugewiesen.

Um die Anlage herum erstreckt sich beispielhaft der zweite Bereich. In dem zweiten Bereich befinden sich vorteilhaft Vorrichtungen zur Bestückung der Anlage. Hier können ggf. händisch auszuführende Tätigkeiten notwendig sein. Daher kann zum Schutz der Personen in dem zweiten Bereich eine höhere Sicherheitsstufe notwendig sein. Schließlich kann der zweite Bereich an den dritten Bereich angrenzen. Der dritte Bereich kann sich durch regelmäßige händisch auszuführende Tätigkeiten auszeichnen. Daher ist in diesem dritten Bereich eine hohe Sicherheitsstufe notwendig.

In diesem Beispiel teilt sich der Raum in die drei Bereiche auf, wobei dem jeweiligen Bereich eine eigene Sicherheitsstufe zugeordnet ist. Die Bereiche sind jeweils benachbart im Raum angeordnet, d.h., die zwei Bereiche weisen jeweils eine gemeinsame Grenze auf oder sie liegen zumindest nahe beieinander.

Die Bereiche können auch durch physikalische Grenzen, wie Zugangsschleusen, Raumteiler, Gänge oder (Licht-)Vorhänge, getrennt sein.

Durch die Einteilung des Raumes, beispielhaft einer Produktionshalle, in Bereiche mit jeweils einer Sicherheitsstufe, kann dem jeweiligen Antrieb, welcher sich in dem jeweiligen Bereich befindet, eine Sicherheitsstufe zugeordnet werden.

Die Zuordnung kann dabei unabhängig von dem Anschluss von dem jeweiligen Antrieb an die Bewegungsteuerung erfolgen. Durch die Zuweisung eines Bereiches bzw. einer Sicherheitsstufe kann die Projektierung einer Anlage vereinfacht erfolgen.

Somit wird die oben genannte Aufgabe derart gelöst, indem die Projektierung durch die Zuordnung des jeweiligen Antriebs an den Bereich bzw. einer Sicherheitsstufe flexibel projektiert werden kann.

Bei einer vorteilhaften Ausgestaltung des fehlersicheren Automatisierungssystems ist jeweils einem Bereich ein fehlersicherer Prozessor zugeordnet.

Vorteilhaft überwacht der fehlersichere Prozessor die Funktion des jeweiligen Antriebs in dem zugeordneten Bereich. Vorteilhaft ist der fehlersichere Prozessor mit der Bewegungssteuerung verbunden.

Vorteilhaft stellt der fehlersichere Prozessor den Datenaustausch und/oder den Signalaustausch zwischen der Bewegungssteuerung und dem entsprechenden Antriebs sicher.

Der jeweilige fehlersichere Prozessor ist vorteilhaft dem jeweils entsprechenden Bereich zugeordnet. So kann für jeweils einen Bereich und/oder für jeweils eine Sicherheitsstufe ein fehlersicherer Prozessor mit der Bewegungssteuerung verbunden sein.

In einer vorteilhaften Ausgestaltung des fehlersicheren Automatisierungssystems ist jeweils einem Bereich ein fehlersicherer Prozessor zugeordnet.

Durch die Zuordnung eines jeweils eigenen fehlersicheren Prozessors zu einem Bereich kann der jeweilige fehlersichere Prozessor entsprechend der Sicherheitsstufe des jeweiligen Bereichs angepasst sein. So ist es beispielhaft möglich, angepasste fehlersichere Prozessoren für unterschiedliche Sicherheitsstufen einzusetzen. Ein Bereich mit einer Sicherheitsstufe mit geringen Anforderungen kann mithin einem fehlersicheren Prozessor zugeordnet sein. Ein Bereich mit einer hohen Sicherheitsstufe kann, entsprechend der Anforderungen, einem besonders leistungsfähigen fehlersicheren Prozessor zugeordnet sein.

Zusammenfassend kann also die jeweilige Sicherheitsstufe durch jeweils einen angepassten fehlersicheren Prozessor gewährleistet sein.

Vorteilhaft können einem Bereich auch mehrere fehlersichere Prozessoren zugeordnet werden.

Durch die Zuordnung von jeweils (zumindest) einen fehlersicheren Prozessor zu jeweils einem Bereich kann die Fehlersicherheit des Automatisierungssystems erhöht werden.

In einer weiteren vorteilhaften Ausgestaltung des fehlersicheren Automatisierungssystems sind der jeweilige Antrieb und/oder der jeweilige fehlersichere Prozessor über eine fehlersichere Datenverbindung verbunden.

Unter einer fehlersicheren Datenverbindung wird eine Datenverbindung verstanden, bei welcher sichergestellt ist, dass die richtigen Signale oder die richtigen Daten zu der vorgesehenen Zeit, mit der vorgesehenen Signalstärke ankommen. Weiter kann, insbesondere durch eine redundante Ausführung die Übertragung der korrekten Daten geprüft werden. Eine fehlersichere Übertragung kann beispielhaft durch eine redundante Übertragung mit anschließendem Vergleich ausgebildet sein.

Beispielhaft für eine fehlersichere Datenverbindung ist PROFIBUS oder PROFINET der Firma Siemens AG. Eine andere fehlersichere Datenverbindung erfolgt beispielhaft mit Hilfe einer PROFIsafe-Adressierung.

Durch die sichere Übertragung von Daten und/oder Signalen genügt auch die Verbindung der einzelnen Komponenten vorteilhaft dem gewählten Sicherheitsstandard. Zudem werden Fehler bei der Übertragung von Signalen oder Daten aufgedeckt.

Erfindungsgemäß ist der jeweiligen Sicherheitsstufe eine Aktionszeit zugewiesen, wobei die Aktionszeit eine Zeitdauer von einem Auslösesignal bis zur Aktion des jeweiligen Antriebs ist.

Eine Aktionszeit ist beispielhaft die Zeitdauer, welche ein Schalter zur Änderung eines Schaltzustandes benötigt. Die Überwachungszeit kann sich auch aus mehreren Schaltzeiten und/oder Bremszeiten zusammensetzen.

Durch die Ausführung kann die Einhaltung der sicherheitsrelevanten Standards einfach und fehlerquellenfrei gewährleistet sein.

Bei einer weiteren vorteilhaften Ausgestaltung ist der jeweilige fehlersichere Prozessor als fehlersicherer IO-Controller (Eingabe/Ausgabe-Controller) ausgebildet.

Der fehlersichere Prozessor dient insbesondere zur Vermeidung von Fehlern bei der Übertragung von Daten und/oder Signalen. Ein fehlersicherer Prozessor ist daher vorteilhaft als IO-Controller (Input-Output-Controller bzw. Eingabe/Ausgabe-Controller), insbesondere für eine so genannte I-Device Kommunikation, beispielhaft für einen weiteren Prozessor oder eine weitere Komponente, ausgebildet. Somit kann aus einer nicht-fehlersicheren Komponente eine fehlersichere Komponente werden.

Der fehlersichere Prozessor kann auch als so genannter I-Slave, insbesondere für eine so genannte I-Slave-Kommunikation für einen Prozessor, insbesondere einen nicht-fehlersicheren Prozessor, oder eine entsprechende Komponente ausgebildet sein. Ein nicht-fehlersicherer Prozessor wird auch als Standardprozessor bezeichnet. Die letztgenannte Ausführung kann auch mit fehlersicheren Komponenten, insbesondere weiteren fehlersicheren Prozessoren, kombiniert werden.

Weiter kann der fehlersichere Prozessor auch zur Datenübertragung und/oder Signalübertragung von und zu einem (weiteren) fehlersicheren Prozessor vorgesehen sein. Dies wird auch als I-Slave zu einem direkten Datenaustausch und/oder Signalaustausch bezeichnet.

Der fehlersichere Prozessor kann auch als IO-Controller mit einem (weiteren) fehlersicheren Prozessor, insbesondere für eine fehlersichere Übertragung von Signalen und/oder Daten, vorgesehen sein. Dies wird auch als shared-device-Funktionalität bezeichnet.

Die vorstehend ausgeführten Möglichkeiten können auch in Kombination angewendet werden.

Durch die Verwendung eines fehlersicheren Prozessors als fehlersicheren IO-Controller kann ein nicht-fehlersicheres Automatisierungssystem zumindest bereichsweise zu einem fehlersicheren Automatisierungssystem aufgerüstet werden.

Bei einer weiteren vorteilhaften Ausgestaltung des fehlersicheren Automatisierungssystems sind die fehlersicheren Prozessoren jeweils miteinander durch eine Datenverbindung verbunden.

Vorteilhaft sind auch die fehlersicheren Prozessoren miteinander verbunden. Vorzugsweise dient zur Verbindung der fehlersicheren Prozessoren eine fehlersichere Datenverbindung.

Durch die Verbindung der fehlersicheren Prozessoren kann der entsprechende Sicherheitsstandard, beispielhaft durch eine Umleitung der Kommunikation oder ein kontrolliertes Herunterfahren der Maschine, eingehalten werden.

Fehlersichere Prozessoren sind bevorzugt als Software-Module ausgebildet. Eine Verbindung der fehlersicheren Prozessoren erfolgt dann durch einen Datenaustausch der Software-Module.

Die Verbindung der fehlersicheren Prozessoren untereinander dient vorzugsweise zur Redundanz bei mehreren fehlersicheren Prozessoren. So kann ein fehlersicherer Prozessor im Slave-Modus Daten und/oder Signale zu einem fehlersicheren Prozessor im Master-Modus weiterleiten. In einem redundanten Aufbau dient insbesondere die (direkte) Verbindung der fehlersicheren Prozessoren zum schnellen Austausch von Daten.

Bei einer weiteren vorteilhaften Ausgestaltung des fehlersicheren Automatisierungssystems sind die Antriebe und/oder die fehlersicheren Prozessoren jeweils einer Zone zugeordnet. Vorteilhaft ist die Zone als jeweils eine Ebene in einem Netzwerk oder einem anderen Verbindungsschema der Datenverbindung ausgebildet. Unterschiedliche Zonen können jeweils unterschiedliche Sichereinheitsstufen aufweisen.

Als eine Zone kann eine fehlersichere Zone verstanden werden. So können Antriebe, für die keine besonderen Sicherheitsansprüche bestehen, einer ersten Zone zugeordnet werden. Die erste Zone kann sich mithin durch eine geringe bis keine Sicherheitsstufe auszeichnen. In der ersten Zone ist also nur ein einfacher fehlersicherer Prozessor zugeordnet. Gegebenenfalls ist auch gar kein fehlersicherer Prozessor notwendig.

Unter einem Netzwerk wird hier das Verbindungsschema der einzelnen Komponenten des Automatisierungssystems verstanden.

Weiter kann ein Netzwerk auch eine zweite und/oder eine dritte Zone mit höheren Sicherheitsstandards aufweisen. Durch das gesteigerte Sicherheitsbedürfnis ist eine höhere Fehlersicherheit notwendig. Eine verbesserte fehlersichere Übertragung von Daten und/oder Signalen in den Zonen des Netzwerks, welches eine fehlersichere Kommunikation in dem Netzwerk sicherstellt, kann durch weitere fehlersichere Prozessoren gewährleistet sein, welche der jeweiligen Zone des Netzwerks zugeordnet sind.

Durch die Zuordnung von Zonen in einem Netzwerk eines Automatisierungsnetzwerks kann insbesondere die Datenübertragung und/oder Signalübertragung an die Erfordernisse der Fehlersicherheit des einzelnen Antriebs angepasst werden.

Bei einer weiteren Ausgestaltung des fehlersicheren Automatisierungssystems sind der jeweilige fehlersichere Prozessor, die jeweilige Bewegungssteuerung und/oder der jeweilige Antrieb redundant ausgebildet.

Eine redundante Ausbildung einer Komponente, wie einer Bewegungssteuerung, eines (fehlersicheren-) Prozessors oder einer (fehlersicheren-) Datenverbindung bedeutet, dass das fehlersichere Automatisierungssystem die jeweilige Komponente mehrfach aufweist. So können zwei Komponenten, beispielweise zwei fehlersichere Prozessoren, derart miteinander wechselwirken, dass in einem gewöhnlichen Betrieb die erste Komponente als Master ausgebildet ist und entsprechende Funktionen ausführt und die zweite Komponente als Slave ausgebildet ist und entsprechende Funktionen ausführt. Falls bei dem ersten fehlersicheren Prozessor eine Fehlfunktion detektiert wird, so tritt der zweite fehlersichere Prozessor (bisher in der Slave-Funktion) an die Stelle des ersten fehlersicheren Prozessors. Der zweite fehlersichere Prozessor kann in der Master-Funktion weiterlaufen, während der erste fehlersichere Prozessor in eine Slave-Funktion überführt wird.

Bei einer Fehlfunktion des Masters wird also die Master-Slave-Einteilung geändert.

Bei einer redundanten Ausführung einer Datenübertragung durch eine fehlersichere Datenverbindung werden die Daten und/oder die Signale über die zumindest zwei Datenverbindungen geleitet. Vorteilhaft findet ein Abgleich der übertragenen Daten oder Signale statt.

Vorteilhaft findet über die Datenverbindung ein Datenvergleich oder ein Signalvergleich zwischen den einzelnen Komponenten des Automatisierungssystems statt.

Bei einer weiteren vorteilhaften Ausgestaltung des fehlersicheren Automatisierungssystems weist dieses zudem ein Eingabesystem auf, wobei das Eingabesystem zur Bereitstellung von Signalen für das fehlersichere Automatisierungssystem vorgesehen ist, wobei das Eingabesystem zur Zuweisung der jeweiligen Sicherheitsstufe für den jeweiligen Antrieb ausgebildet ist.

Das Eingabesystem ist vorteilhaft analog zu einem Engineering-Systems ausgebildet. Das Eingabesystem dient vorzugsweise zur Interaktion mit dem Benutzer, wobei der Benutzer Bewegungsabläufe für die einzelnen Antriebe festlegen kann. In der vorteilhaften Ausgestaltung kann der Benutzer auch die Sicherheitsstufe, den jeweiligen fehlersicheren Prozessor und/oder die jeweilige Überwachungszeit dem jeweiligen Antrieb oder einer anderen Komponente zuordnen.

Die Eingabe findet vorteilhaft mit Hilfe eines Eingabemittels statt. Das Eingabesystem kann in einer vorteilhaften Ausgestaltung in einem Steuerprogramm integriert sein oder mit dem Steuerprogramm datentechnisch wechselwirken.

Vorteilhaft ist das Eingabesystem als Computerprogramm oder als Computerprogrammpaket ausgebildet. Das Eingabesystem kann daher auf einer Recheneinheit installiert werden und auf der Recheneinheit ausgeführt werden. Hierzu wird das Eingabesystem in den Arbeitsspeicher übertragen und mit einem Prozessor der Recheneinheit ausgeführt. Das Eingabesystem und/oder das Steuerprogramm dienen vorteilhaft zur Bereitstellung von Daten an die Bewegungssteuerung und/oder an die (fehlersicheren) Prozessoren oder Antriebe.

Das Eingabesystem ist vorteilhaft auch dazu geeignet, die Zone des Netzwerkes anzugeben, in welcher sich der fehlersichere Prozessor, der jeweilige Antrieb und/oder die jeweilige Bewegungssteuerung befinden.

Im Folgenden wird die Erfindung anhand von Figuren weiter beschrieben und erläutert. Dabei stellen die Figuren schematische oder vorteilhafte Ausführungen der Erfindung dar. Selbstverständlich können einzelne Merkmale der einzelnen Ausführungen zu neuen Ausführungen kombiniert werden, ohne den Bereich der hier vorgestellten Erfindung zu verlassen. Es zeigen
- FIG 1: ein fehlersicheres Automatisierungssystem,
- FIG 2: ein weiteres fehlersicheres Automatisierungssystem,
- FIG 3: ein weiteres fehlersicheres Automatisierungssystem,
- FIG 4: ein Eingabesystem sowie
- FIG 5: Zonen eines Netzwerks eines fehlersicheren Automatisierungssystems.

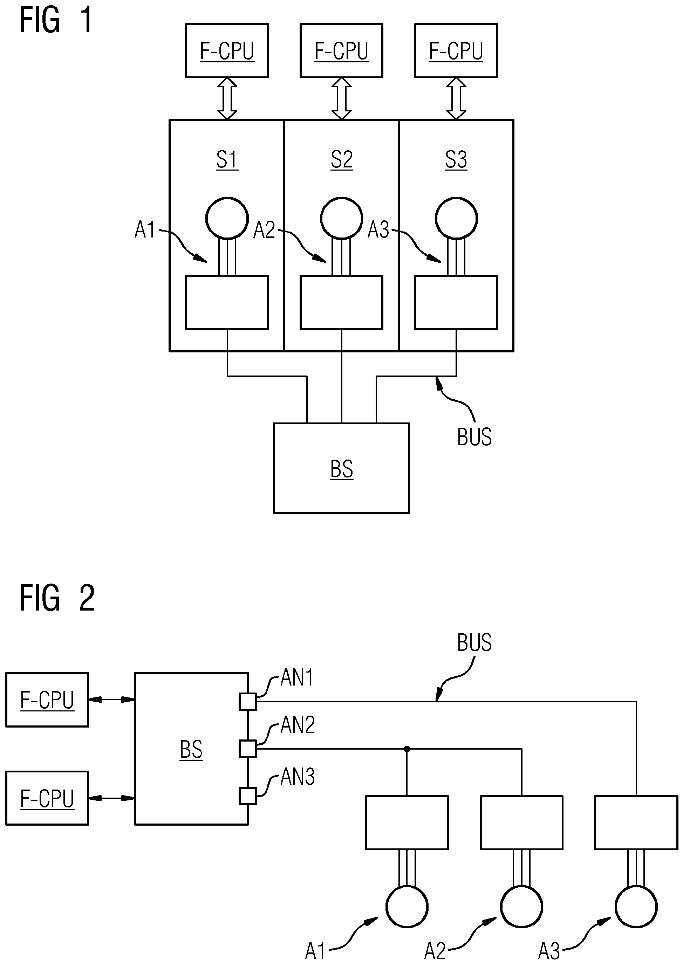

FIG 1 zeigt ein fehlersicheres Automatisierungssystem. Das fehlersichere Automatisierungssystem weist eine Bewegungssteuerung BS auf, wobei die Bewegungssteuerung BS mit Antrieben A1, A2, A3 verbunden ist. Die Verbindung der Bewegungssteuerung BS mit dem jeweiligen Antrieb A1, A2, A3 erfolgt mit einer Datenverbindung BUS, wobei die Datenverbindung BUS vorteilhaft als fehlersichere Datenverbindung BUS ausgebildet ist. Die Antriebe A1, A2, A3 sind jeweils einem Bereich S1, S2, S3 zugeordnet. Hierbei ist ein erster Antrieb A1 einem ersten Bereich S1 zugeordnet. Weiter ist ein zweiter Antrieb A2 einem zweiten Bereich S2 zugeordnet und ein dritter Antrieb A3 einem dritten Bereich S3 zugeordnet. Der jeweilige Bereich S1, S2, S3 ist jeweils einem fehlersicheren Prozessor F-CPU zugeordnet. Der fehlersichere Prozessor F-CPU dient zur Überwachung des jeweiligen Bereichs S1, S2, S3. Die fehlersicheren Prozessoren F-CPU können auch in die Bewegungssteuerung BS und/oder in den jeweiligen Antrieb A1, A2, A3 integriert sein.

FIG 2 zeigt ein weiteres fehlersicheres Automatisierungssystem. Bei dem hier gezeigten fehlersicheren Automatisierungssystem ist die Bewegungssteuerung BS jeweils über einen Anschluss An1, An2, An3 mit einem Antrieb A1, A2, A3 verbunden. Zur Verbindung der Bewegungssteuerung BS mit dem jeweiligen Antrieb A1, A2, A3 dient die Datenverbindung BUS, vorteilhaft als fehlersichere Datenverbindung BUS ausgestaltet. Weiter sind fehlersichere Prozessoren F-CPU mit der Bewegungssteuerung BS verbunden. Die Verbindung der fehlersicheren Prozessoren F-CPU und der Bewegungssteuerung BS erfolgt vorteilhaft ebenso mit Hilfe einer Datenverbindung BUS, wobei die Datenverbindung BUS insbesondere als (industrielles-) Ethernet ausgebildet ist. Die fehlersicheren Prozessoren F-CPU können zur Fehlersicherung des jeweiligen Anschlusses An1, An2, An3 der Bewegungssteuerung BS vorgesehen sein.

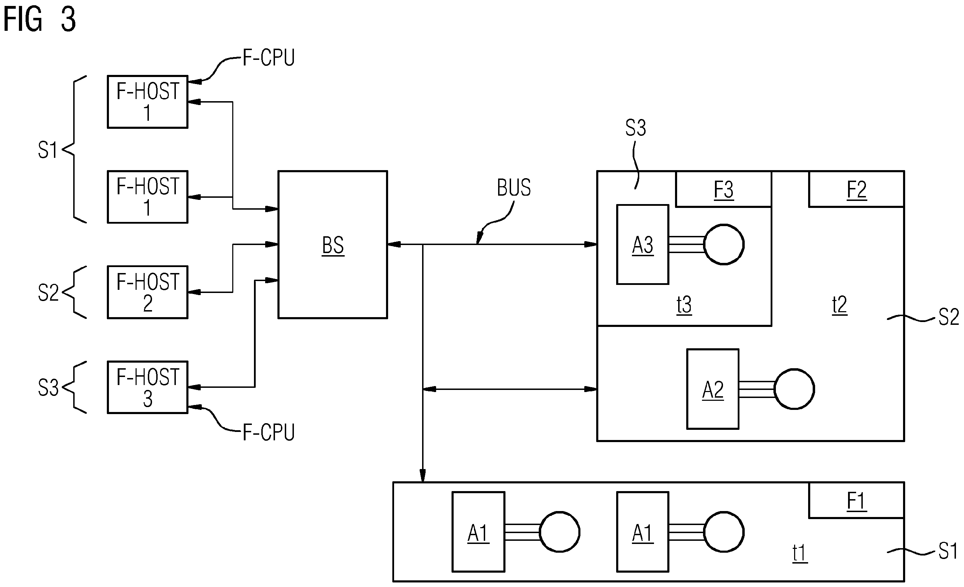

FIG 3 zeigt ein weiteres fehlersicheres Automatisierungssystem. Bei dem hier gezeigten fehlersicheren Automatisierungssystem ist eine Bewegungssteuerung BS zur Steuerung von Antrieben A1, A2, A3 ausgebildet. Zur Verbindung der Bewegungssteuerung BS mit den Antrieben A1, A2, A3 dient eine Datenverbindung BUS, wobei die Datenverbindung BUS vorteilhaft als fehlersichere Datenverbindung BUS ausgebildet ist. Die Antriebe A1, A2, A3 sind in Bereichen S1, S2, S3 eines Raums, insbesondere einer Fertigungshalle oder einer Anlage, angeordnet. Die einzelnen Antriebe umfassen jeweils einen Motor M.

Dem jeweiligen Bereich S1, S2, S3 ist dabei eine Sicherheitsstufe F1, F2, F3 zugeordnet. Die einzelnen Bereiche sind optional durch Begrenzungen wie Lichtschranken, Zugangstüren in Verbindung mit Zwischenwänden voneinander getrennt (nicht gezeigt). Die Sicherheitsstufe F1, F2, F3 gibt dabei an, wie fehlersicher der jeweilige Antrieb A1, A2, A3 ausgebildet sein muss bzw. funktionieren muss. Die Fehlersicherheit des einzelnen Antriebs A1, A2, A3 und/oder des jeweiligen Bereichs S1, S2, S3 ist durch eine Aktionszeit t1, t2, t3 angegeben. Die Aktionszeit t1, t2, t3 dient dabei zur Festlegung, wie schnell ein Antrieb A1, A2, A3 zum Stillstand oder auf eine Nenndrehzahl verzögert werden muss. In dem hier dargestellten Beispiel sind zwei erste Antriebe A1 einem ersten Bereich S1 zugeordnet, wobei der erste Bereich S1 einer ersten Sicherheitsstufe F1 zugeordnet ist. In diesem Beispiel ist der erste Bereich S1 mit der höchsten Sicherheitsstufe F1 ausgebildet. Die Bewegungssteuerung BS dient weiter zum Antrieb eines zweiten Antriebs A2, wobei der zweite Antrieb A2 einem zweiten Bereich S2 zugeordnet ist bzw. sich in diesem befindet. Den zweiten Bereich S2 ist eine zweite Sicherheitsstufe F2 zugeordnet. Die Sicherheitsstufe F2 ist dabei geringer als die erste Sicherheitsstufe F1. Somit ist auch die zweite Überwachungszeit t2 vorteilhaft größer ausgestaltet als die erste Überwachungszeit t1. Die Bewegungssteuerung BS dient weiter zum Antrieb eines dritten Antriebs A3, wobei der dritte Antrieb A3 einem dritten Bereich S3 zugeordnet ist. Der dritte Bereich S3 ist einer dritten Sicherheitsstufe F3 zugeordnet.

Der dritte Bereich S3 ist durch eine dritte Aktionszeitzeit t3 gekennzeichnet, wobei die Aktionszeit t3 größer als die zweite Überwachungszeit t2 und weiter größer als die erste Überwachungszeit t1 ausgebildet sein kann. Die Sicherheitsstufe F1, F2, F3 orientiert sich hierbei an der Überwachungszeit t1, t2, t3, wobei eine geringe Überwachungszeit t1, t2, t3 eine hohe Sicherheitsstufe F1, F2, F3 charakterisiert. Zur Überwachung der Fehlersicherheit in den einzelnen Bereichen S1, S2, S3 sind fehlersichere Prozessoren F-CPU den jeweiligen Sicherheitsstufen F1, F2, F3 bzw. den einzelnen Bereichen S1, S2, S3 zugeordnet. Die fehlersicheren Prozessoren F-CPU sind hierbei vorteilhaft als fehlersichere HOST-Module ausgebildet. Die Sicherheitsrelevanz des ersten Bereichs S1 ist dabei am Höchsten. Der erste fehlersichere Prozessor F-CPU ist redundant ausgeführt. Die fehlersicheren Prozessoren F-CPU sind als fehlersichere Host-Module F-HOST ausgebildet.

Die Nummerierung 1, 2 und 3 unter den entsprechenden Bezugszeichen (F-HOST) gibt lediglich an, dass bei dem redundant ausgeführten fehlersicheren Prozessor um das gleiche Host-Modell handeln kann. Die weiteren beiden Host-Module können unterschiedlich ausgestaltet sein.

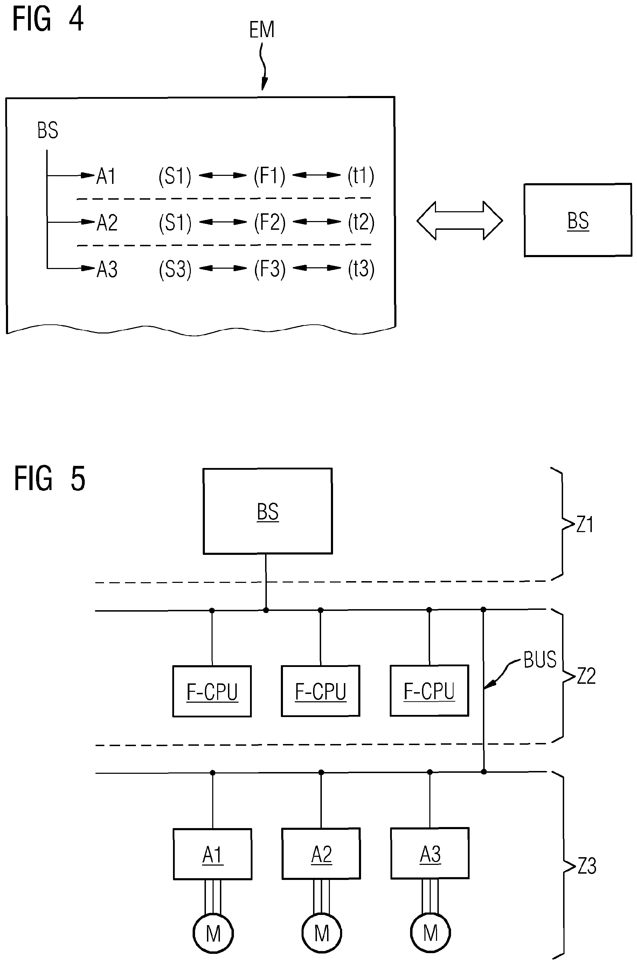

FIG 4 zeigt ein Eingabesystem. Das Eingabesystem weist eine Eingabemaske EM auf, wobei die Eingabemaske EM die einzelnen Antriebe A1, A2, A3 auflistet und ihre jeweilige Verbindung mit der Bewegungssteuerung BS schematisch darstellt. Als Parameter weist die Eingabemaske die jeweilige Sicherheitsstufe F1, F2 für den jeweiligen Antrieb A1, A2, A3 auf. Dem jeweiligen Bereich S1, S2, S3 ist weiter jeweils eine Sicherheitsstufe F1, F2 zuordenbar. Dem jeweiligen Antrieb A1, A2, A3 kann ebenfalls eine jeweilige Aktionszeit t1, t2, t3 zugeordnet werden. Die Eingabemaske dient zur Eingabe der Sicherheitsstufen F1, F2 bzw. der Bereiche S1, S3 zu den einzelnen Antrieben A1, A2, A3. Die eingegebenen Daten werden von dem Eingabesystem an die Bewegungssteuerung BS überführt, wobei auch die Bewegungssteuerung BS vorteilhaft anhand der in der Eingabemaske eingegebenen Beziehungen prüfend eingreifen kann. Durch die Zuordnung des ersten Antriebs A1 und des zweiten Antriebs A2 zur Sicherheitsstufe S1 und die Zuordnung der Sicherheitsstufen F1 bzw. F2 zu dem Bereich S1 soll angezeigt werden, dass auch mehrere Parameter einander zugeordnet werden können.

FIG 5 zeigt Zonen Z1, Z2, Z3 eines Netzwerks eines fehlersicheren Automatisierungssystems. Hierbei sind die Zonen Z1, Z2, Z3 als Netzwerkebenen ausgebildet, wobei eine erste Netzwerkebene die Bewegungssteuerung umfasst, die zweite Netzwerkumgebung bzw. die zweite Zone Z2, zumindest einen fehlersicheren Prozessor aufweist und eine dritte Zone bzw. eine dritte Netzwerkebene die jeweiligen Antriebe A1, A2, A3 aufweist. Zur Verbindung der einzelnen Ebenen dient vorteilhaft eine Datenverbindung BUS. Einzelne Zonen Z1, Z2, Z3 können auch durch fehlersichere Datenverbindungen BUS ausgezeichnet und/oder verbunden sein.

Zusammenfassend betrifft ein Aspekt der Erfindung ein fehlersicheres Automatisierungssystem. Ein weiterer Aspekt der Erfindung betrifft ein Eingabesystem. Bei dem fehlersicheren Automatisierungssystem ist eine Bewegungssteuerung BS mit mehreren fehlersicheren Prozessoren F-CPU verbunden. Die fehlersicheren Prozessoren F-CPU sind jeweils einer Sicherheitsstufe S1, S2, S3 zugeordnet. Der Bewegungssteuerung BS ist zumindest ein Antrieb A1, A2, A3 zugeordnet, wobei der jeweilige Antriebe A1, A2, A3 jeweils Bereichen S1, S2, S3 zugeordnet ist und dem jeweiligen Bereich S1, S2, S3 eine Sicherheitsstufe F1, F2, F3 zugeordnet ist. Die Sicherheitsstufe F1, F2, F3 gibt an, wie (fehler-)sicher der jeweilige Bereich S1, S2, S3 ausgebildet sein muss. Durch das fehlersichere Automatisierungssystem können einzelne Bereiche S1, S2, S3 in Räumen wie Fertigungshallen einfach mit der notwendigen Fehlersicherheit ausgestattet sein.

## Patentansprüche

1. Fehlersicheres Automatisierungssystem, aufweisend eine Bewegungssteuerung (BS) sowie mehrere fehlersichere Prozessoren (F-CPU), wobei die Bewegungssteuerung zur Steuerung und/ oder Regelung einer Mehrzahl von Antrieben (A1, A2, A3) vorgesehen ist, wobei die Antriebe (A1, A2, A3) jeweils einem Bereich (S1, S2, S3) zugeordnet sind, wobei dem jeweiligen Bereich (S1, S2, S3) jeweils eine Sicherheitsstufe (F1, F2, F3) zugewiesen ist, wobei die Bereiche (S1, S2, S3) jeweils zueinander benachbart, insbesondere räumlich benachbart, angeordnet sind, jeweils einem Bereich (S1, S2, S3) ein fehlersicherer Prozessor (F-CPU) zugeordnet ist,
**dadurch gekennzeichnet, dass**
der jeweiligen Sicherheitsstufe (F1, F2, F3) eine Aktionszeit (t1, t2, t3) zugewiesen ist, wobei die Aktionszeit (t1, t2, t3) eine Zeitdauer von einem Auslösesignal bis zur Aktion des jeweiligen Antriebs (A1, A2, A3) ist.

2. Fehlersicheres Automatisierungssystem nach Anspruch 1, wobei der jeweilige Antrieb (A1, A2, A3) und/oder der jeweilige fehlersichere Prozessor (F-CPU) über eine fehlersichere Datenverbindung (F-BUS) verbunden sind.

3. Fehlersicheres Automatisierungssystem nach einem der vorangehenden Ansprüche, wobei der jeweilige fehlersichere Prozessor (F-CPU) als fehlersicherer IO-Controller oder als DP-I-Slave ausgebildet ist.

4. Fehlersicheres Automatisierungssystem nach einem der vorangehenden Ansprüche, **dadurch gekennzeichnet, dass** die fehlersicheren Prozessoren (F-CPU) jeweils miteinander durch eine Datenverbindung (BUS) verbunden sind.

5. Fehlersicheres Automatisierungssystem nach einem der vorangehenden Ansprüche, wobei die Antriebe (A1, A2, A3) und/ oder die fehlersicheren Prozessoren (F-CPU) jeweils einer Zone (Z1, Z2, Z3) zugeordnet sind.

6. Fehlersicheres Automatisierungssystem nach einem der vorangehenden Ansprüche, wobei der jeweilige fehlersichere Prozessor (F-CPU), die jeweilige Bewegungssteuerung (BS) und/ oder der jeweilige Antrieb (A1, A2, A3) redundant ausgebildet sind.

7. Fehlersicheres Automatisierungssystem nach einem der vorangehenden Ansprüche, weiter aufweisend ein Eingabesystem, wobei das Eingabesystem zur Bereitstellung von Signalen für das fehlersichere Automatisierungssystem vorgesehen ist, wobei das Eingabesystem zur Zuweisung der jeweiligen Sicherheitsstufe (F1, F2, F3) für den jeweiligen Antrieb (A1, A2, A3) ausgebildet ist.

8. Anlage, insbesondere Produktionsmaschine, Werkzeugmaschine oder industrielle Anlage, aufweisend ein fehlersicheres Automatisierungssystem nach einem der Ansprüche 1 bis 7.

## Claims

1. Failsafe automation system, having a motion controller (BS) and multiple failsafe processors (F-CPU), wherein the motion controller is provided for the purpose of controlling and/or regulating a plurality of drives (A1, A2, A3), wherein the drives (A1, A2, A3) are respectively associated with an area (S1, S2, S3), wherein the respective area (S1, S2, S3) has a respective assigned safety level (F1, F2, F3), wherein the areas (S1, S2, S3) are respectively arranged adjacently, particularly physically adjacently, to one another, and a respective area (S1, S2, S3) has an associated failsafe processor (F-CPU),
**characterized in that**
the respective safety level (F1, F2, F3) has an assigned action time (t1, t2, t3), wherein the action time (t1, t2, t3) is a period of time from a trigger signal to the action of the respective drive (A1, A2, A3).

2. Failsafe automation system according to Claim 1, wherein the respective drive (A1, A2, A3) and/or the respective failsafe processor (F-CPU) are connected via a failsafe data connection (F-BUS).

3. Failsafe automation system according to either of the preceding claims, wherein the respective failsafe processor (F-CPU) is in the form of a failsafe IO controller or in the form of a DP-I slave.

4. Failsafe automation system according to one of the preceding claims, **characterized in that** the failsafe processors (F-CPU) are respectively connected to one another by a data connection (BUS).

5. Failsafe automation system according to one of the preceding claims, wherein the drives (A1, A2, A3) and/or the failsafe processors (F-CPU) are respectively associated with a zone (Z1, Z2, Z3) .

6. Failsafe automation system according to one of the preceding claims, wherein the respective failsafe processor (F-CPU), the respective motion controller (BS) and/or the respective drive (A1, A2, A3) are in redundant form.

7. Failsafe automation system according to one of the preceding claims, further having an input system, wherein the input system is provided for the purpose of providing signals for the failsafe automation system, wherein the input system is designed to assign the respective safety level (F1, F2, F3) for the respective drive (A1, A2, A3).

8. Installation, in particular a production machine, machine tool or industrial installation, having a failsafe automation system according to one of Claims 1 to 7.

## Revendications

1. Système d'automatisation à sécurité intrinsèque, présentant une commande de mouvement (BS) ainsi que plusieurs processeurs à sécurité intrinsèque (F-CPU), la commande de mouvement étant prévue pour commander et/ou réguler une pluralité d'entraînements (A1, A2, A3), les entraînements (A1, A2, A3) étant chacun associés à une zone (S1, S2, S3), un niveau de sécurité (F1, F2, F3) étant affecté à la zone respective (S1, S2, S3),
les zones (S1, S2, S3) étant chacune disposées de manière adjacente, en particulier spatialement adjacente, un processeur à sécurité intrinsèque (F-CPU) étant associé à chaque zone (S1, S2, S3), **caractérisé en ce que**
un temps d'action (t1, t2, t3) est affecté au niveau de sécurité respectif (F1, F2, F3), le temps d'action (t1, t2, t3) étant une durée entre un signal de déclenchement et l'action de l'entraînement respectif (A1, A2, A3).

2. Système d'automatisation à sécurité intrinsèque selon la revendication 1, dans lequel l'entraînement respectif (A1, A2, A3) et/ou le processeur à sécurité intrinsèque respectif (F-CPU) sont connectés par l'intermédiaire d'une connexion de données à sécurité intrinsèque (F-BUS).

3. Système d'automatisation à sécurité intrinsèque selon l'une des revendications précédentes, dans lequel le processeur à sécurité intrinsèque respectif (F-CPU) est conçu comme un contrôleur IO à sécurité intrinsèque ou comme un esclave DP-I.

4. Système d'automatisation à sécurité intrinsèque selon l'une des revendications précédentes, **caractérisé en ce que** les processeurs à sécurité intrinsèque (F-CPU) sont chacun reliés entre eux par une connexion de données (BUS).

5. Système d'automatisation à sécurité intrinsèque selon l'une des revendications précédentes, dans lequel les entraînements (A1, A2, A3) et/ou les processeurs à sécurité intrinsèque (F-CPU) sont chacun associés à une zone (Z1, Z2, Z3).

6. Système d'automatisation à sécurité intrinsèque selon l'une des revendications précédentes, dans lequel le processeur à sécurité intrinsèque respectif (F-CPU), la commande de mouvement respective (BS) et/
ou l'entraînement respectif (A1, A2, A3) sont conçus de manière redondante.

7. Système d'automatisation à sécurité intrinsèque selon l'une des revendications précédentes, présentant en outre un système d'entrée, le système d'entrée étant prévu pour fournir des signaux pour le système d'automatisation à sécurité intrinsèque, le système d'entrée étant conçu pour affecter le niveau de sécurité respectif (F1, F2, F3) à l'entraînement respectif (A1, A2, A3).

8. Installation, en particulier machine de production, machine-outil ou installation industrielle, comprenant un système d'automatisation à sécurité intrinsèque selon l'une des revendications 1 à 7.
